(19) Europäisches Patentamt
European Patent Office
Office européen des brevets

(11) **EP 2 508 327 B1**

(12) **EUROPÄISCHE PATENTSCHRIFT**

(45) Veröffentlichungstag und Bekanntmachung des Hinweises auf die Patenterteilung:
**19.10.2016 Patentblatt 2016/42**

(51) Int Cl.:
***B29C 70/38*** (2006.01)   ***B65H 37/00*** (2006.01)

(21) Anmeldenummer: **12162850.7**

(22) Anmeldetag: **02.04.2012**

(54) **Verfahren und Vorrichtung zur Verarbeitung eines Bandes**

Device and method for processing a tape

Procédé et dispositif destinés au traitement d'une bande

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2011 DE 102011001835**

(43) Veröffentlichungstag der Anmeldung:
**10.10.2012 Patentblatt 2012/41**

(73) Patentinhaber: **Fraunhofer-Gesellschaft zur Förderung der angewandten Forschung e.V.
80686 München (DE)**

(72) Erfinder:
• **Rosen, Chris-Jörg
53545 Linz am Rhein (DE)**

• **Pyschny, Nicolas
52064 Aachen (DE)**
• **Steyer, Martin
72127 Kusterdingen (DE)**
• **Kermer-Meyer, Alexander
52062 Aachen (DE)**

(74) Vertreter: **Naeven, Ralf
König & Naeven
Patent- und Rechtsanwaltskanzlei
Kackertstrasse 10
52072 Aachen (DE)**

(56) Entgegenhaltungen:
**EP-A1- 0 491 354      EP-A1- 1 719 610
WO-A2-2006/134422      WO-A2-2008/155504
DE-A1- 4 002 087      DE-A1-102008 051 121
FR-A1- 2 889 103      US-A- 5 431 749**

**Beschreibung**

Die Erfindung betrifft ein Verfahren sowie eine Vorrichtung zum Verarbeiten eines Bandes. Die Vorrichtung umfasst dabei ein das Band breitseitig pressendes Verarbeitungselement und ein Zuführelement.

Verarbeitung im Sinne der hier betroffenen Erfindung meint insbesondere das Ablegen eines Bandes auf eine Ablagefläche eines weiteren Elements, z. B. zur Herstellung von Verbund-Bauteilen. Die Verarbeitung kann aber auch eine Formänderung des Bandes bedeuten, sei es zur Herstellung eines Fertigproduktes oder eines Halbzeugs.

Aus der US 5,078,821 sind ein Verfahren sowie eine Vorrichtung der vorgenannten Art bekannt, bei dem ein Band oder Tape auf einer Ablagefläche abgelegt wird. Das Tape wird hierfür von einem Vorrat, in der Regel von einer als Zuführelement dienenden Vorratsrolle, entnommen und mit einer Andrückrolle als Verarbeitungselement auf die Ablagefläche abgelegt. Bei dem Tape kann es sich um ein thermoplastisches Material handeln, das vor dem Ablegen erwärmt wird und welches zusammen mit der durch die Andrückrolle ausgeübten Kraft auf der Ablagefläche fixiert wird.

Derartige Systeme werden insbesondere zur Herstellung von Verbundmaterialien verwendet. Die abzulegenden Tapes können faserverstärkte Kunststoffe sein, die insbesondere im Flugzeugbau zur Herstellung von Faserverbundwerkstücken eingesetzt werden. Dabei werden mittels spezieller Ablege- und Wickelanlagen die Bänder auf einer Werkzeugform oder einem Wickeldorn parallel nebeneinander und schichtweise übereinander abgelegt bzw. aufgewickelt und so zu einer Bauteilgeometrie miteinander verbunden.

Ähnliche Systeme existieren auch zur Ablage von Klebebändern.

Die Bänder haben relativ zu ihrer Breite eine nur geringe Dicke und sind daher in Dickenrichtung, das heißt senkrecht zur Bandfläche, ausreichend flexibel, um einer allein in Dickenrichtung gekrümmten Fläche zu folgen. Somit sind das Ablegen auf ebenen Flächen und das Aufwickeln auf zylinderförmigen Bauteilen oder Wickeldornen unproblematisch. Das Ablegen kann in der Regel völlig faltenfrei erfolgen.

Die Mehrzahl der technologisch relevanten Flächen ist jedoch nicht eben oder zylindrisch, sondern weist Krümmungen in unterschiedlichen Orientierungen auf. Derartige nicht abwickelbare Topologien würden daher idealerweise eine Flexibilität des abzulegenden Band auch in lateraler, d.h. seitlicher Richtung erfordern, so dass eine Krümmung des Bandes auch innerhalb der Ebene der Bandfläche möglich ist. Dies ist jedoch bei herkömmlichen Bändern nicht gegeben, weshalb viele Oberflächentopologien beim Bandablegen nur eingeschränkt, das heißt mit sehr schmalen Faserhalbzeugbändern, viel Verschnitt oder gar nicht hergestellt werden können. Grund für die starke Einschränkung der Bieg- oder Krümmbarkeit von Bändern ist deren hohes Flächenträgheitsmoment, welches mit der Tapebreite quadratisch zunimmt.

Die DE 10 2009 014 488 A1 offenbart eine Andruckvorrichtung, die mehrere nebeneinander liegende Rollensegmente aufweist, wobei jedes der Segmente über eine interne Feder in axialer Richtung verschiebbar ist. Auf diese Weise können mit der Andruckvorrichtung Unebenheiten aufgefangen werden. Das Ablegen eines Bandes mit einer lateralen Krümmung ist hingegen nicht offenbart.

Die Entgegenhaltung DE 10 2008 051 121 A1 offenbart eine Vorrichtung zum Drapieren und Vorformen gekrümmter Profilstrukturteile, bei denen das bahnförmige Fasergewirke von einer Spule abgewickelt wird, durch ein Walzenpaar geführt und auf ein Formwerkzeug aufgewickelt wird. Dabei können die Kanten des Bandes vor dem Aufbringen auf das Formwerkzeug mittels Profilgebungsrollen und Positionierrollen verformt werden. Bei einem dargestellten Ausführungsbeispiel ist das Band zwischen dem Walzenpaar und dem Formwerkzeug um 90° verdrillt. Diese Verdrillung bleibt während des Ablegens des Bandes offensichtlich konstant und ist nicht zur Veränderung vorgesehen. Eine laterale Krümmung des abgelegten Bandes ist nicht angesprochen.

Die US 5,078,821 offenbart eine Vorrichtung, die in der Lage ist, Bänder auf ungleichmäßige und komplexe Oberflächen abzulegen. Hierzu kann z. B. eine druckluftgefüllte Walze vorgesehen werden, deren Kontur sich anpasst. Das Ablegen eines Bandes in lateraler Krümmung ist nicht offenbart.

Eine laterale Krümmung eines Bandes könnte durch zumeist unerwünschte Faltenbildung oder dadurch erreicht werden, dass das Band an einer Bandkante relativ zur gegenüberliegenden Bandkante gelängt wird, was dann jedoch eine Verringerung der Bandbreite und/oder seiner Dicke mit sich bringt. Dies ist vielfach, insbesondere für die Herstellung von belasteten Bauteilen, unerwünscht.

Der Erfindung liegt das technische Problem zu Grunde, ein Verfahren und eine Vorrichtung zur Verfügung zu stellen, mit denen es möglich ist, ohne Faltenbildung und ohne wesentliche Verringerung der Dicke oder der Breite eines Bandes diesem eine laterale Krümmung aufzuerlegen.

Bei einem Verfahren der eingangs genannten Art wird die Aufgabe mit den Merkmalen des Anspruchs 1 gelöst, bei einer Vorrichtung der eingangs genannten Art mit den kennzeichnenden Merkmalen des Anspruchs 8.

Vorteilhafte Ausgestaltungen des erfindungsgemäßen Verfahrens bzw. der Vorrichtung ergeben sich aus den Unteransprüchen.

Da es gemäß der Aufgabenstellung nicht zu einer erheblichen Längung von Bandbereichen, z.B. der einen Bandkante relativ zur gegenüberliegenden Bandkante, kommen soll, hat eine Krümmung des Bandes zwangsläufig zur Folge, dass sich innerhalb des Bandes Strukturen relativ zueinander verschieben müssen. Zur Veranschaulichung sei angenommen, das zu verlegende Band bestehe aus einer Vielzahl in einer Matrix eingebetteter und parallel zur Längsrichtung des Bandes verlaufender ununterbrochenen in Breitenrichtung nebeneinander liegender Fasern, wobei jede der Fasern weder gestaucht noch gelängt werden kann. Um ein solches Band mit lateraler Krümmung, z.B. in einem Kreisbogen, verlegen zu können, müssen die Fasern innerhalb der Matrix verschiebbar sein. Die Strukturverschiebungen können durch eine Erwärmung des Bandes je nach Bandmaterial ermöglicht oder auch nur erleichtert werden. Liegt ein solches Band nun im Kreisbogen und ist das Bogenmaß für die äußere Bandkante der der inneren Bandkante gleich, so ist die im Bogen abgelegte Länge der äußeren Fasern länger als die der inneren Fasern. Diese Längendifferenz wird im Verdrillabschnitt durch eine geeignete exzentrische Verdrillung kompensiert.

Die Exzentrizität der Verdrillung bedeutet, dass die Achse der Verdrillung außerhalb der Mittellängsachse des Bandes liegt. Die Verdrillachse ist parallel zur Mittellängsachse in Breitenrichtung verschoben. Die Verdrillachse kann dabei innerhalb des Bandes liegen, entlang einer der Bandkanten verlaufen oder auch außerhalb des Bandes angeordnet sein. Innerhalb des Verdrillabschnittes ist die Bandkante länger, die den größeren Abstand zur Verdrillachse aufweist. Somit muss also im Verdrillabschnitt die Bandkante der Verdrillachse näher liegen, die im bereits verarbeiteten Band die längere Bandkante darstellt. Ist z.B. eine der Bandkanten mit der Verdrillachse identisch und mit dem Band bislang eine einzige Krümmung abgelegt worden, bildet diese Bandkante im verlegten Band die äußere Bandkante.

Werden dem zu verarbeitenden Band nacheinander laterale Krümmungen unterschiedlicher Orientierung aufgegeben, kann es also erforderlich sein, während der Verarbeitung die Verdrillachse zu verschieben, z. B. von einer Bandkante zur anderen.

Das Band muss nicht aus parallelen Fasern bestehen oder diese aufweisen. Die für eine Krümmung notwendigen Strukturverschiebungen innerhalb des Bandes sind auch bei anderen Bandstrukturen, z.B. amorpher Natur, möglich.

Die Mittel zur Verdrillung können das Zuführelement für das Band umfassen. Das Zuführelement kann dabei auch durch eine Vorratsrolle für das Band selbst gebildet sein. Dann müsste die Vorratsrolle, die eine Abroll-Drehachse zum Abrollen des Bandes aufweist, um eine zur Abroll-Drehachse senkrechte Verdrillachse drehbar ausgestaltet oder gelagert sein.

Um eine Drehung der Vorratsrolle zu vermeiden kann es vorteilhaft sein, für die Verdrillung mindestens ein gesondertes Verdrillelement vorzusehen. Ein solches Verdrillelement weist eine Durchführung oder Aufnahme für das Band auf, die vorzugsweise schlitzartig ist. Diese Durchführung kann durch eine einfache rechteckförmige Öffnung realisiert sein, so dass das Band durch die Kanten der Öffnung geführt ist. Zur Schonung des Bandmaterials kann es aber vorteilhaft sein, die Durchführung durch einander gegenüberliegende Rollen zu begrenzen, die auf die beiden Breitseiten des Bandes wirken. Dabei kann zur definierten Führung des Bandes eine von den Rollen auf das Band wirkende kontrollierte Kraft vorgesehen sein. Es können auch für die Bandkantenführungen Rollen vorgesehen sein. Insbesondere kann es vorteilhaft sein, die Bandkantenführung, sei sie durch Rollen oder durch einfache Anschläge realisiert, in Längsrichtung der Durchführung verschiebbar zu gestalten. Auf diese Weise ließe sich die Verdrillachse während des Verarbeitungsprozesses verschieben. Alternativ wäre es selbstverständlich möglich, zur Verschiebung der Verdrillachse das gesamte Verdrillelement relativ zum Verarbeitungselement zu verschieben.

Das Maß der Verdrillung im Verdrillabschnitt ist von mehreren Parametern abhängig, insbesondere von der Krümmung des bereits abgelegten Bandes, der Breite des Bandes, der Lage der Verdrillachse und der Länge des Verdrillabschnitts. Aus den Parametern kann die notwendige Verdrillung empirisch ermittelt oder berechnet werden, so dass die Verdrillung und vorteilhaft der gesamte Ablagevorgang computergesteuert automatisiert werden kann.

Bei der Verdrillung kann es vorteilhaft sein, eine gegenseitige Berührung der Bandbreitseiten zu vermeiden, insbesondere dann, wenn die Bandbreitseiten im Falle der Berührung aneinander haften würden. Insbesondere zur Vermeidung einer Berührung der Bandbreitenseiten kann es vorteilhaft sein, mehrere Verdrillelemente vorzusehen, die im Abstand hintereinander angeordnet sind.

Es kann auch vorteilhaft sein, zwischen dem Zuführelement und einer Bandvorratsrolle einen hinreichend großen Abstand zu lassen und über diesen Abstand eine Gegenverdrillung zuzulassen, die der Verdrillung im Verdrillungsabschnitt entgegengesetzt orientiert ist. Somit kann vermieden werden, die Vorratsrolle der Verdrillbewegung folgend ausgestalten zu müssen.

Ist das Zuführelement als ein Verdrillelement vorgesehen, wird sich - sofern die Drehachse der Vorratsrolle relativ zum Verarbeitungselement nicht verdreht wird - zwischen dem Zuführelement und der Vorratsrolle ebenfalls eine Verdrillung des Bandmaterials ausbilden. Aufgrund des entsprechend großen Abstandes zwischen Vorratsrolle und Zuführelement ist aber eine Gefahr der Bandbreitenseitenberührung gering. In diesem Abschnitt wäre eine Bandbreitenseitenberührung auch unerheblich, wenn eine solche Berührung nicht nachteilig ist, z. B. mangels einer Haftwirkung, wie dies regelmäßig der Fall ist für solche Bänder, die für eine solche Haftwirkung zunächst erwärmt werden müssen. Eine Haftwirkung ohne Erwärmung kann sich z. B. bei Klebebändern ergeben.

Es können auch Mittel zur Temperierung des Verarbeitungselements und/oder der Mittel zum Verdrillen vorgesehen sein. Die Temperierung kann eine Erwärmung als auch eine Kühlung bedeuten. Die Temperierung hängt von der Art des Bandmaterials, der Art der Verarbeitung und der Art des temperierten Gegenstandes, z. B. des Verarbeitungselements oder der Mittel zum Verdrillen ab.

Ein bevorzugtes Ausführungsbeispiel des erfindungsgemäßen Verfahrens sowie eine vorteilhafte Ausbildungsform der erfindungsgemäßen Vorrichtung sind im Folgenden anhand von Figuren beispielhaft dargestellt.

Es zeigen schematisch

Fig. 1:   Das Aufbringen eines Bandes auf eine ebene Fläche gemäß dem Stand der Technik,
Fig. 2:   Das Aufbringen eines Bandes auf ein zylinderförmiges Bauteil nach dem Stand der Technik,
Fig. 3:   eine gekrümmte Ablagefläche gefertigt nach dem Stand der Technik,
Fig. 4:   eine weitere nach dem Stand der Technik gefertigte gekrümmte Ablagefläche
Fig. 5:   eine gekrümmte Ablagefläche gefertigt nach dem erfindungsgemäßen Verfahren,
Fig. 6:   ein auf ein konusförmiges Bauteil abgelegtes Band nach dem Stand der Technik,
Fig. 7:   ein erfindungsgemäß auf ein konusförmiges Bauteil abgelegtes Band,
Fig. 8:   eine abgelegte und eine nicht abgelegte Bandstrecke nach dem Stand der Technik,
Fig. 9:   eine abgelegte und eine nicht abgelegte Bandstrecke gemäß der Erfindung,
Fig. 10:   eine Darstellung der Strukturverschiebung in einem gekrümmten Bandabschnitt,
Fig. 11:   eine Verdrillung eines noch nicht abgelegten Bandabschnittes,
Fig. 12:   das Ablegen eines gedrillten Bandes von einer Vorratsrolle bei geschlossenem Verdrillabschnitt,
Fig. 13:   ein Verdrillelement mit Schlitzführung,
Fig. 14:   das Ablegen eines gedrillten Bandes von einer Vorratsrolle bei offenem Verdrillabschnitt,
Fig. 15:   Herstellen eines gekrümmten Bandes als Halbzeug bei geschlossenem Verdrillabschnitt,
Fig. 16:   Herstellen eines gekrümmten Bandes als Halbzeug bei offenem Verdrillabschnitt,
Fig. 17:   ein Verdrillelement mit verschiebbarer Rollenführung,
Fig. 18:   ein Verdrillelement mit doppelter Rollenführung,
Fig. 19:   ein Verdrillelement mit verschiebbarer doppelter Rollenführung,

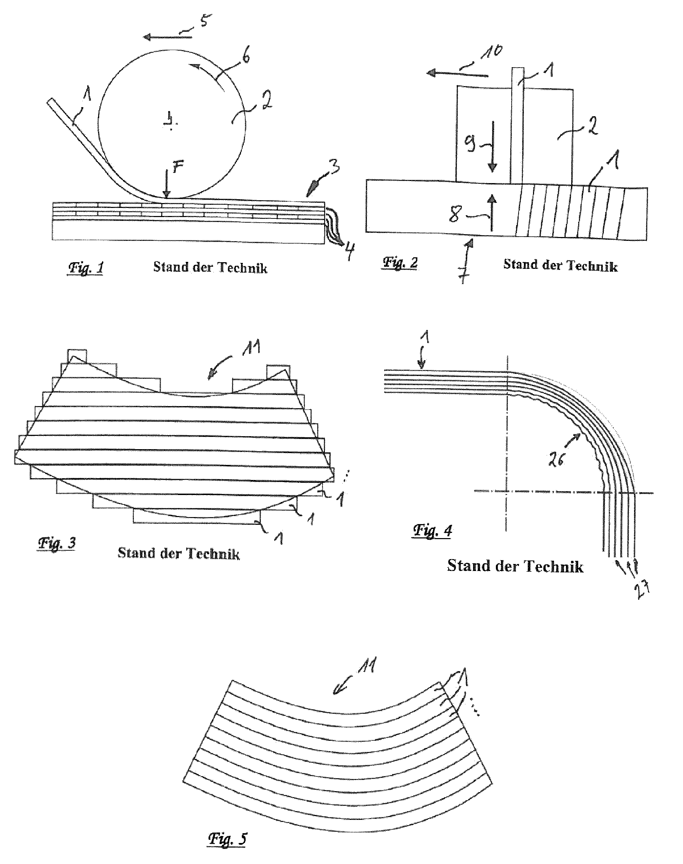

Die Fig. 1 bis 3 zeigen das aus dem Stand der Technik bekannte Ablegen eines Bauteils auf einer Fläche zur Herstellung eines Verbundbauteils. Fig. 1 zeigt das Ablegen eines Bandes 1 mittels einer Andrückrolle 2 auf ein Bauteil 3, das bereits mehrere Schichten 4 von abgelegten Bändern 1 aufweist. Übereinander liegende Schichten 4 weisen dabei zueinander senkrechte Orientierungen auf. Für das Ablegen des Bandes 1 kann das Band 1 oder die durch das Bauteil 3 gegebene Ablagefläche erwärmt werden, um eine dauerhafte Verbindung zwischen dem Band 1 und dem Bauteil 3 zu bewirken. Das Band 1 stammt von einer hier nicht dargestellten Vorratsrolle.

Die Form des abzulegenden Bandes 1, welches eine in Fig. 1 nicht zu sehende Breite aufweist, bedingt, dass die Bänder 1 gemäß dem Stand der Technik möglichst geradlinig verlegt werden, um Faltenbildungen zu vermeiden. Beim Verlegeprozess wird die Andrückrolle 2 in Verlegerichtung gemäß dem Richtungspfeil 5 gerollt, was durch den Drehrichtungspfeil 6 angezeigt wird. Dabei wird über eine Drehachse der Andrückrolle 2 eine Andrückkraft F auf das abzulegende Band 1 ausgeübt, welches so mit der entsprechenden Kraft auf das Bauteil 3 gedrückt wird.

Fig. 2 zeigt in seitlicher Ansicht ein zylinderförmiges Bauteil 7, welches nach dem Stand der Technik mit dem Band 1 umwickelt wird. Das Band 1 weist auf Grund seiner im Vergleich zur Breite relativ geringen Dicke eine hohe Flexibilität senkrecht zu der Bandfläche auf und lässt sich daher gut wickeln. Wie in der Ebene auch, wird das Band 1 mittels einer Andrückrolle 2 auf das Bauteil 7 gepresst. Hierfür wird vorteilhaft das Bauteil 7 in Richtung des Drehrichtungspfeils 8 gedreht. Dementsprechend dreht sich die Andrückrolle 2 entgegengesetzt (Drehrichtungspfeil 9). Zur Ausbildung einer Bandlage wird die Andrückrolle 2 zudem parallel zur Längsachse des Bauteils 7 verfahren, so dass die Bandabschnitte unmittelbar aneinander grenzend und eine möglichst lückenlose Schicht bildend abgelegt werden (Richtungspfeil 10). Bei hinreichendem Durchmesser des zylinderförmigen Bauteils 7 weicht der Winkel zwischen Verlegerichtung und der Längsachse des Bauteils 7 nur gering von 90° ab, so dass eine Faltenbildung beim Ablegen des Bandes vermieden werden kann.

Fig. 3 stellt eine aus dem Stand der Technik bekannte Lösung dar, ein in einer Ebene gekrümmtes Segment 11 mit einem Band 1 zu belegen, wobei das Band geradlinig abgelegt wird. Dabei wird das Band 1 in nebeneinander liegenden Abschnitten parallel zueinander verlegt. In dem dargestellten Beispiel ist das Band 1 in 14 Bandabschnitten abzulegen, das heißt das Band muss 14 Mal angesetzt werden, wobei gleichzeitig ein nicht unerheblicher Verschnitt entsteht.

Fig. 4 zeigt abschnittsweise schematisch ein nach einem alternativen Stand der Technik gekrümmt gelegtes Band 1, bei dem beim Verlegen an der Innenseite des gekrümmten Bereiches Stauchungswellen 26 akzeptiert worden sind. Die laterale Krümmung hat außerdem im Krümmungsbereich eine Verringerung der Bandbreite bewirkt, um den längeren Weg des Außenbereichs des Bandes zu kompensieren. Dargestellt ist lediglich ein einzelnes Band 1 mit imaginären Fasern 27, um die Stauchungswellen 26 deutlich machen zu können.

Fig. 5 zeigt den gekrümmten Bereich 11 gemäß Fig. 3, wobei in Fig. 5 jedoch das Band 1 gemäß der Erfindung dem Verlauf des gekrümmten Bereichs 11 folgend in lediglich 9 benachbarten Abschnitten ohne Verschnitt abgelegt ist.

Möglichkeiten, ein Band 1 gemäß Fig. 5 lateral gekrümmt zu verlegen sind weiter unten dargestellt.

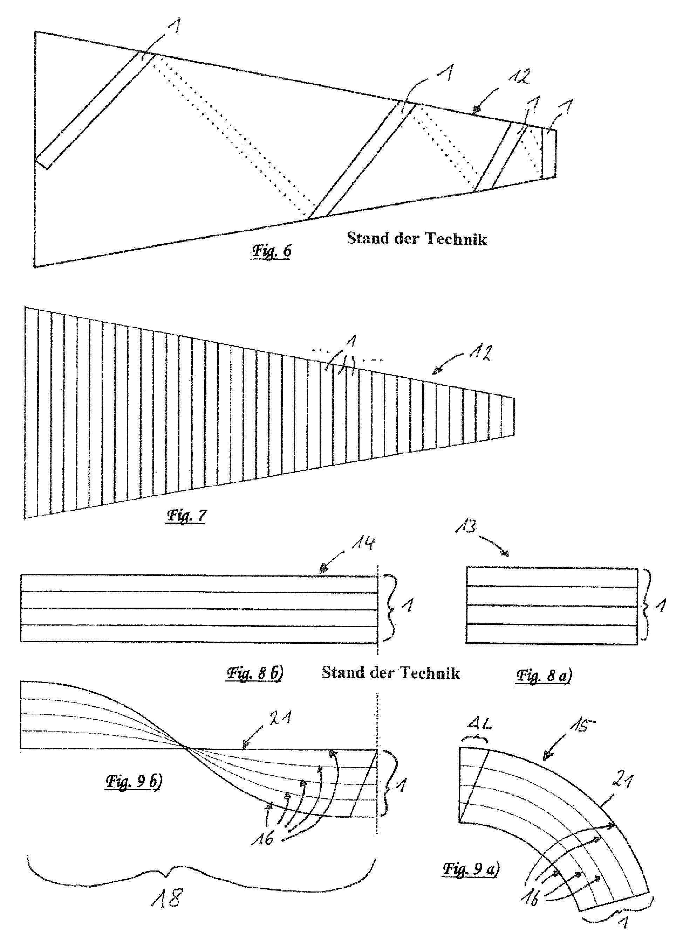

Fig. 6 zeigt wiederum den Stand der Technik beim Ablegen eines Bandes 1 auf ein konusförmiges Bauteil 12.

Auf Grund der Konusform des Bauteils 12 wächst der Abstand zwischen zwei benachbarten Bandabschnitten des ununterbrochenen Bandes, wenn das Band 1 der Orientierung der Oberflächen des Bauteils 12 folgend ohne laterale Krümmung abgelegt wird. Dies hat zum einen den Nachteil, dass die Herstellung einer lückenlosen Ablageschicht nahezu unmöglich wird. Zum anderen ändert sich die Orientierung des Bandes 1 relativ zur Längsachse des Bauteils 12. In vielen Fällen müssen die verlegten Bänder 1 im fertigen Bauteil 12 definierte Kräfte aufnehmen können. Die Belastbarkeit eines Bauteils 12 ist vielfach von der Orientierung der abgelegten Bänder 1 abhängig, weshalb eine sich gemäß Fig. 6 ändernde Orientierung nachteilig sein kann.

Fig. 7 zeigt das Bauteil 12 gemäß Fig. 6, wobei nunmehr jedoch die Orientierung des Bandes 1 relativ zur Längsachse des Bauteils 12 konstant bleibt. Dies kann bei einem konusförmigen Bauteil 12 jedoch allein mit einem relativ zur Oberfläche des Bauteils 12 lateral gekrümmten Verlegemodus für das Band 1 erreicht werden. Es ist offensichtlich, dass die in Fig. 7 gezeigte Verlegerichtung das Verlegen einer geschlossenen Lage des Bandes 1 erleichtert.

Die Fig. 8 und 9 sollen in einer Gegenüberstellung vom Verlegen nach dem Stand der Technik (Fig. 8) und nach der Erfindung (Fig. 9) das erfindungsgemäße Verfahren zum gekrümmten Ablegen eines Bandes verdeutlichen. Fig. 8a zeigt ein geradlinig abgelegtes Bandstück 13, Fig. 8b einen noch nicht abgelegten Bandabschnitt 14, wie er sich beispielsweise von einer hier nicht dargestellten Andrückrolle zu einer ebenfalls nicht dargestellten Vorratsrolle ebenfalls geradlinig erstreckt.

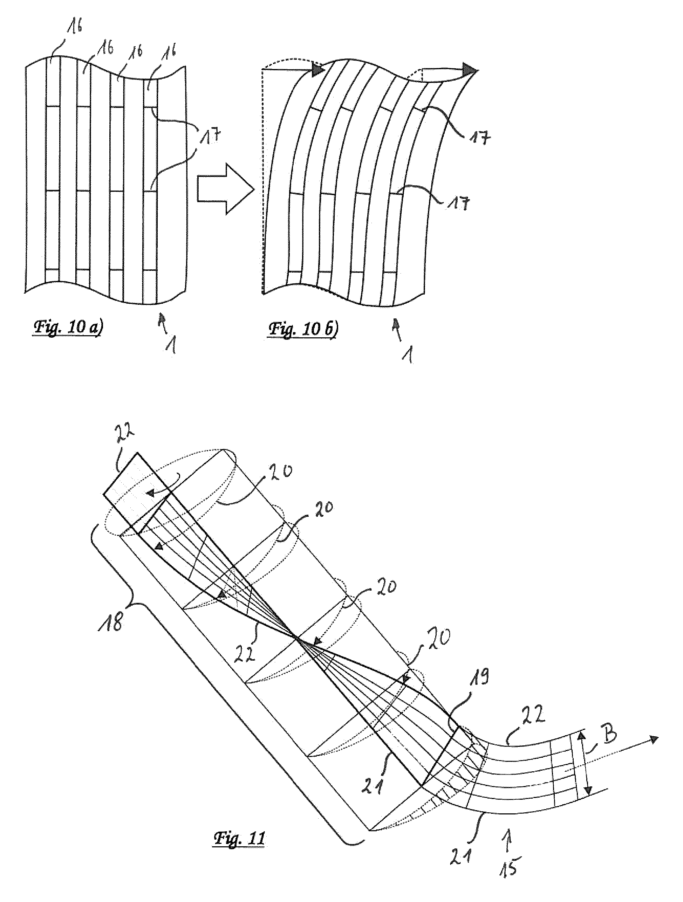

Fig. 9a zeigt demgegenüber einen gekrümmt abgelegten Bandabschnitt 15. Die Krümmung soll ohne Faltenbildung beim Ablegen ermöglicht werden. Zudem soll eine Verschmälerung der Bandbreite oder eine Verringerung der Banddicke weitestgehend vermieden werden. Diese Vorgaben haben zur Konsequenz, dass innerhalb der Struktur des abgelegten Bandes 1 Verschiebungen ermöglicht werden müssen. Beispielhaft sei angenommen, das Band 1 weise Fasern 16 auf, die in Längsrichtung des Bandes 1 parallel zueinander verlaufen. Die bezogen auf die Krümmung äußerste Faser 16 weist in dem dargestellten Bandabschnitt 15 eine größere Länge auf als die innerste Faser 16. Die Längendifferenz betrage $\Delta L$. Eine entsprechend geringere Längendifferenz ergibt sich zwischen der innersten Faser 16 und jeder zwischen der innersten und der äußersten Faser 16 liegenden Faser 16. Diese Längendifferenz soll nicht dadurch erreicht werden, dass bestimmte Faserabschnitte gelängt werden, da dies eine Schwächung der gelängten Fasern 16 sowie eine Deformation des Bandes 1 in seiner Breite und Dicke zur Folge hätte. Folglich muss es innerhalb des Bandes 1 im gekrümmten Bereich zu einer Verschiebung der Fasern 16 relativ zueinander kommen, wie dies in Fig. 10 schematisch dargestellt ist.

Fig. 10a zeigt ein geradlinig verlaufendes Band 1 mit Fasern 16, wobei die Fasern 16 äquidistante Markierungen 17 aufweisen, die hier lediglich zur Verdeutlichung der Strukturverschiebungen dargestellt sind. Fig. 10b zeigt nun das Band 1 in einem gekrümmten Abschnitt. Anhand der Markierungen 17 sind die Strukturverschiebungen innerhalb des Bandes 1 erkennbar. Derartige Strukturverschiebungen können durch Erwärmen des Bandes 1 erleichtert werden.

Die in Fig. 9a gezeigte Längendifferenz zwischen den inneren und äußeren Fasern 16 muss von dem noch nicht abgelegten Band 1 in einem Verdrillabschnitt 18 aufgefangen werden (siehe Fig. 9b). Die geringere Länge der inneren Fasern 16 liegt nun im Verdrillabschnitt 18 vor. Auf Grund dessen wird das Band in dem von einer hier nicht dargestellten Andrückrolle und einem hier ebenfalls nicht dargestellten Zuführelement begrenzten Verdrillabschnitt 18 exzentrisch, nämlich um die Bandkante 21 verdrillt, die im gekrümmten Bandabschnitt 15 außen liegt. Diese Verdrillung fängt den Längenunterschied zwischen den Fasern 16 auf und das Band bleibt im Verdrillabschnitt 18 gespannt.

Das Konzept des Verdrillens funktioniert dabei nicht nur bei einem hier beispielhaft aufgeführten faserartigen Aufbau des Bandes 1, sondern bei beliebigen Strukturen, soweit diese ein Verschieben relativ zueinander innerhalb des Bandes 1 derart erlauben, dass ein gekrümmtes Ablegen ohne Faltenbildung möglich ist.

Fig. 11 zeigt nun einen abgelegten gekrümmten Bandabschnitt 15 und den Verdrillabschnitt 18 zusammenhängend. Eine Andrückrolle, die im Bereich des Übergangs zwischen abgelegtem Abschnitt 15 und Verdrillabschnitt 18 angeordnet wäre, ist der Übersichtlichkeit halber nicht dargestellt. Der Übergang zwischen abgelegtem Abschnitt 15 und Verdrillabschnitt 18 ist durch die Linie 19 angedeutet.

Verdrillungspfeile 20 zeigen die zunehmende Verdrillung des Verdrillabschnitts 18 um die äußere Bandkante 21 herum an. Diese äußere Bandkante 21 bildet auch die äußere Kante im gekrümmt abgelegten Bandabschnitt 15.

Die Linie 22 steht für die Begrenzung des Verdrillabschnitts 18 durch ein hier nicht dargestelltes Zuführelement.

Ohne die Verdrillung würde eine innere Bandkante 22 eine Faltenbildung beim weiteren Ablegen des Bandes 1 bewirken, wenn die Krümmung durch den Verfahrweg des Bandes erzwungen wird. Das Maß der notwenigen Verdrillung, das heißt der zwischen dem Zuführelement und dem Verarbeitungselement im Band gegebene Verdrillwinkel, ist unter anderem eine Funktion des Krümmungsradius, der Bandbreite B (siehe Fig. 11) und der Verdrillungslänge L, die der Länge des Verdrillabschnitts 18 entspricht.

Insbesondere wird die Verdrillung aber auch durch die bereits abgelegte Krümmungsstrecke und die Orientierung der jeweiligen Krümmungen bestimmt. Wird ein bestimmter Krümmungsabschnitt 15 durchlaufen und anschließend geradlinig verlegt, muss die am Ende des gekrümmten Ablegens im Verdrillabschnitt gegebene Verdrillung beim weiteren geradlinigen Verlegen aufrecht erhalten bleiben, da der Längenunterschied zwischen innerer Bandkante 22 und äußerer Bandkante 21 unverändert Bestand hat. Wird anschließend in einer Krümmung verlegt, die der ersten Krümmung entgegengesetzt orientiert ist, wird die Verdrillung entsprechend wieder mit und mit aufgelöst und gegebenenfalls in eine entgegengesetzt orientierte Verdrillung überführt.

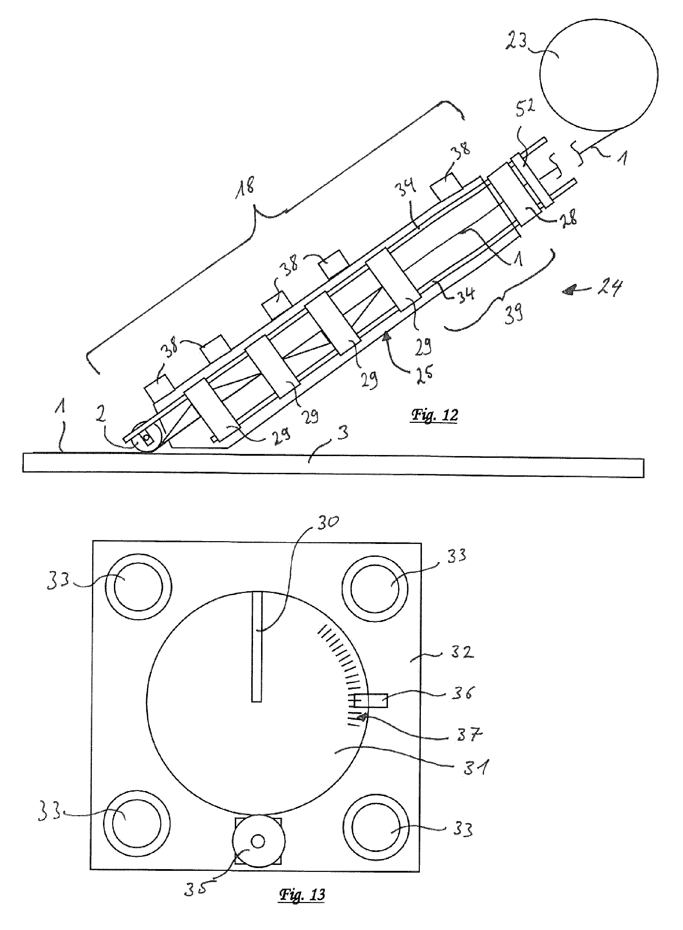

Figur 12 zeigt schematisch eine erste Ablegevorrichtung 24 für das von einer Vorratsrolle 23 abgewickelte Band 1. Das Band 1 durchläuft in der Ablegevorrichtung 24 ein weitgehend geschlossenes Gehäuse 25 und wird mittels einer Andrückrolle 2 auf die Ablagefläche eines Bauteils 3 gedrückt. In der seitlichen Ansicht gemäß Fig. 12 ist nicht sichtbar, dass das Band 1 mit einer lateralen Krümmung verlegt wird. Im Gehäuse 25 ist ein Verdrillabschnitt 18 vorgesehen, der sich von einem Zuführelement 28 bis zur Andrückrolle 2 erstreckt. Im Verdrillabschnitt 18 wird das Band 1 mittels Verdrillelementen 29 und einem ebenfalls wie ein Verdrillelement aufgebautes Zuführelement 28 exzentrisch verdrillt. Ein beispielhaftes Verdrillelement 29 ist in Fig. 13 in Aufsicht gezeigt. Das Verdrillelement 29 weist einen Durchgangsschlitz 30 auf, durch den das in Fig. 13 nicht dargestellte Band 1 geführt wird. Der Durchgangsschlitz 30 befindet sich in einem Drehelement 31, welches relativ zu einem Rahmenteil 32 um eine zur Zeichnungsebene senkrechten Achse drehbar angeordnet ist. Das Rahmenteil 32 ist über vier Bohrungen 33 durch vier Haltestangen 34 (siehe Fig. 12) im Gehäuse 25 der ersten Ablegevorrichtung 24 gehalten. In entsprechender Weise ist auch das Zuführelement 28, das nicht in einer gesonderten Figur dargestellt ist (siehe Fig. 12), an den Haltestangen 34 gehalten. Die Halterung des Zuführelements 28 und der Verdrillelemente 29 ist im Betrieb an der Ablegevorrichtung 24 fixiert. Zuführelement 28 und Verdrillelement 29 können jedoch von den Haltestangen 34 gelöst werden, um zum Beispiel die Länge des Verdrillabschnittes 18 zu verändern.

Das Drehelement 31 ist für die Drehung relativ zum Rahmenteil 32 mittels eines Antriebs 35 angetrieben. Die Drehposition des Drehelements 30 relativ zum Rahmenteil 32 kann mittels eines Sensors 36 anhand einer Skala 37 festgestellt werden. Das Signal des Sensors 36 wird einer hier nicht dargestellten Steuereinheit zugeführt, die auch für die Steuerung des Antriebs 35 zuständig ist. Die Verdrilleinheiten 29 sind gleichmäßig auf dem Verdrillabschnitt 18 verteilt, um eine gleichmäßige Verdrillung gewährleisten zu können. Der Abstand zwischen den Verdrillelementen 29 wird so gewählt, dass zuverlässig ein durch die Verdrillung bedingtes Aufeinanderlegen von zwei Abschnitten des Bandes 1 vermieden wird.

Das Band 1 wird im Gehäuse 25 mit Hilfe von Erwärmungseinheiten 38 erwärmt (siehe Fig. 12). Die Erwärmung kann zum Beispiel mittele eines Heißluftgebläse erfolgen. In diesem Beispiel kann eine Erwärmungseinheit 38 für einen beliebigen Bestandteil eines oder mehrerer Heißluftgebläsesystems stehen, z.B. sowohl für eine Heißluftzufuhr als auch für eine Abluftöffnung. Alternativ können auch zum Beispiel Heizstrahler eingesetzt werden. Die Erwärmung oder die Aufrechterhaltung der Bandtemperatur erfolgt im gesamten Verdrillabschnitt 18. Im Verdrillabschnitt ist des Weiteren eine Wärmstrecke 39 gegeben, innerhalb der das Band 1 nicht in sich verdrillt ist, was vorteilhaft für eine gleichmäßige Erwärmung sein kann. Die Wärmstrecke 39 wird durch das Zuführelement 28 und das dem Zuführelement benachbarte Verdrillelement 29 begrenzt. Dieses Verdrillelement 29 und das Zuführelement 28 drehen sich im Gleichlauf, damit innerhalb der Wärmstrecke 39 das Band 1 geradlinig verläuft und dessen Verdrillung nicht weiter erhöht wird. Zwischen dem Zuführelement 28 und der Vorratsrolle 23 ist das Band 1 in hier nicht dargestellter Weise entgegengesetzt zum Verdrillabschnitt 18 verdrillt, d.h. die Verdrillung wird bis zur Vorratsrolle 23 wieder aufgehoben, da die Vorratsrolle 23 keine Verdrillbewegung ausführt. Durch einen hinreichend großen Abstand zwischen der Vorratsrolle 23 und dem Zuführelement 28 ist eine entsprechend große Verdrillmöglichkeit gegeben. Da das Band 1 in diesem Bereich 1 noch nicht erwärmt ist, wäre es auch unkritisch, wenn es auf Grund der Verdrillung zu Berührungen von Bandabschnitten käme.

Dem Zuführelement 28 vorgeschaltet ist noch ein Abschlusselement 52, welches zum Aufbringen einer definierten Bandspannung dient. Dabei kann es sich um eine Bremse, mit der eine Bandspannung größer als Null erzeugt werden kann, oder um einen Motor für eine Bandspannung größer oder gleich Null handeln.

Die gesamte Ablegevorrichtung 24 kann mittels hier nicht dargestellter Hilfsmittel relativ zum Bauteil 3 bewegt werden, wobei das Band 1 auch in lateral gekrümmten Bahnen auf dem Bauteil 3 verlegt werden kann. Die Vorratsrolle 23 kann dabei mitgeführt werden, so dass die Lage ihrer Drehachse relativ zum Gehäuse 25 fixiert ist. Bei hinreichend langem Abstand zwischen Vorratsrolle 23 und der nächsten Stützstelle des Bandes 1, in Fig. 12 das Abschlusselement 52, kann die Bewegung der Ablegevorrichtung 24 auch unabhängig von der Vorratsrolle 23 erfolgen.

Für die Steuerung der Ablegevorrichtung 24 ist die Verdrillung des Bandes 1 in Abhängigkeit diverser Parameter zu jedem Zeitpunkt vorzugeben. Für den Idealfall eines beliebig dünnen Bandes 1 der Breite $B_T$, welches mit einer lateralen Krümmung mit konstantem, auf die Verdrillachse bezogenem Krümmungsradius R und gleichmäßiger Verdrillung im Verdrillabschnitt 18 mit der Länge $L_S$ abgelegt wird, und einer Bandkante als Verdrillachse, gilt der in der folgenden Formel wiedergegeben Zusammenhang

$$R = -v * \frac{\sqrt{L_s^2 + 2 * B^2 * (1 - \cos\varphi)}}{\dot{\varphi} * B * \sin\varphi}$$

wobei $v$ die Ablegegeschwindigkeit, $\varphi$ der Verdrillwinkel und $\dot{\varphi}$ die zeitliche Ableitung von $\varphi$ ist. Die Verdrillung erfolgte dabei um die Außenkante des Bandes 1, die im gekrümmt abgelegten Band außen liegt.

Für die Praxis kann die Verdrillung in Abhängigkeit von den Bandeigenschaften, der Form der abzulegenden Bahn, der Lage der Verdrillachse und der Ablegegeschwindigkeit auch empirisch oder anhand von Simulationsrechnungen ermittelt und in Form von Datensätzen der Steuerung zur Verfügung gestellt werden. Wie bereits dargestellt sind exzentrische Verdrillungen auch um eine Achse möglich, die zwischen einer der Außenkanten des Bandes 1 und seiner Mittellängsachse liegt oder auch außerhalb des Bandes 1.

Die Verdrillung des Bandes 1 im Verdrillabschnitt 18 kann bereits ursächlich für die Krümmung des Bandes 1 beim Verlassen der Andrückeinheit 2 sein. Die Verdrillung bewirkt dann zusammen mit der Erwärmung und der Klemmung des Bandes 1 zwischen Bauteil 3 und Andrückrolle 2 die für die Krümmung notwendigen Strukturverschiebungen im Band 1.

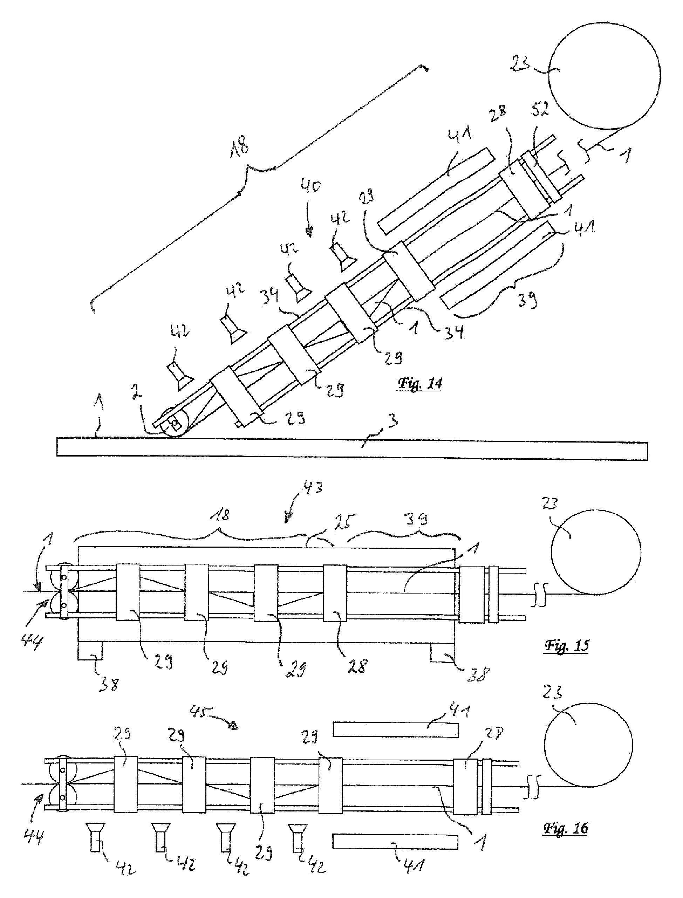

Fig. 14 zeigt eine zweite Ablegevorrichtung 40, welche offen, das heißt ohne Gehäuse, ist. Die Haltestange 34 und die der Andrückrolle 2 nächstgelegenen drei Verdrilleinheiten 29 sind entsprechend zur ersten Ablegevorrichtung 24 gemäß Fig. 12 gestaltet. Die zweite Ablegevorrichtung 40 gemäß Fig. 14 weist einen Verdrillabschnitt 18 auf, der gleichzeitig auch die Wärmstrecke 39 umfasst. Die Wärmestrecke 39 wird vom Zuführelement 28 und der ersten Verdrilleinheit 29 begrenzt. Das Zuführelement 28 ist genauso gestaltet wie jedes der Verdrillelemente 29 und zur Ausbildung einer exzentrischen Verdrillung des Bandes 1 vorgesehen. Das Zuführelement 28 und die ihr benachbarte erste Verdrilleinheit 29 führen hier jedoch ihre Drehbewegungen im Gleichlauf zueinander aus, so dass die zwischen Andrückrolle 2 und der die Wärmstrecke 39 begrenzenden Verdrilleinheit gegebene Verdrillung des Bandes 1 innerhalb der Wärmstrecke 39 nicht weiter erhöht wird und das Band geradlinig und flach verläuft. Zwischen dem Zuführelement 28 und der Vorratsrolle 23 wird wie auch in der Vorrichtung gemäß Fig. 12 eine Gegenverdrillung erzeugt, da die Vorratsrolle 23 der Verdrillbewegung nicht folgt.

In der Wärmstrecke 39 sind Heizelemente 41 vorgesehen, die dort je nach Ausfertigung das Band 1 einseitig, zweiseitig oder über die komplette Oberfläche erwärmen. Bei den Heizelementen 41 kann es sich z.B. um Ringdüsen, Ringstrahler oder Heizwendeln handeln. Optional können die Heizelemente 41 um die Längsachse der Ablegevorrichtung 40 herum derart kreisen, dass sie im Gleichlauf mit der durch Zuführelement 28 und benachbartem Verdrillelement 29 erzeugten Drehbewegung des Bandes 1 sind und hierdurch jedes Heizelement 41 stets derselben Breitseite des Bandes 1 zugewandt ist. Auf diese Weise wird eine zeitlich konstante Erwärmung des Bandes in der Wärmstrecke 39 gewährleistet.

Ein sich drehendes Band 1 in der Wärmstrecke 39 kann selbstverständlich auch in der Ausgestaltung nach Fig. 12 in entsprechender Weise vorgesehen werden, wobei dort jedoch die Erwärmungseinheiten 38 am Gehäuse fixiert sind.

In dem der Wärmestrecke 39 folgenden Teil des Verdrillabschnittes 18 werden Warmhaltestrahler 42 eingesetzt, um die Temperatur des Bandes 1 aufrecht zu erhalten.

Fig. 15 zeigt eine erste Bandverarbeitungsvorrichtung 43, die nicht unmittelbar zum Ablegen des Bandes 1 auf einem Bauteil vorgesehen ist, sondern zur Herstellung eines gekrümmten Bandes 1 als Halbzeug. Die erste Bandverarbeitungsvorrichtung 43 ist ähnlich der ersten Ablegevorrichtung 24 aufgebaut. Gleiche Bezugszeichen stehen für einander entsprechende Elemente in den jeweiligen Vorrichtungen 24 und 43. Die Heizelemente 38 stehen in Fig. 15 für eine Erwärmung des Bandes 1 mittels Heißluft, die im Bereich der Wärmstrecke 39 eingeblasen und im Bereich des Endes der Verdrilleinheit 18 abgesogen wird. Anstelle der Andrückrolle 2 ist in der ersten Bandverarbeitungsvorrichtung 43 ein Rollenpaar 44 vorgesehen, das auf beide Breitseiten des Bandes 1 presst. Durch die im Verdrillabschnitt 18 gegebene Verdrillung des Bandes 1 verlässt das Band 1 das Rollenpaar 44 mit einer entsprechenden lateralen Krümmung, die in Fig. 14 nicht dargestellt ist. Somit wird ein Halbzeug erhalten, das weiterverarbeitbar ist und zum Beispiel in einem späteren Schritt auf ein entsprechend geformtes Bauteil aufgebracht werden kann.

Fig. 16 zeigt eine zweite Bandverarbeitungsvorrichtung 45, die analog zu der zweiten Ablegevorrichtung 40 aufgebaut ist, jedoch ebenfalls anstelle der Andrückrolle 2 ein Rollenpaar 44 zur Herstellung eines bandförmigen Halbzeuges aufweist. Wegen der weiteren Einzelheiten wird auf die Beschreibung zu Fig. 14 verwiesen.

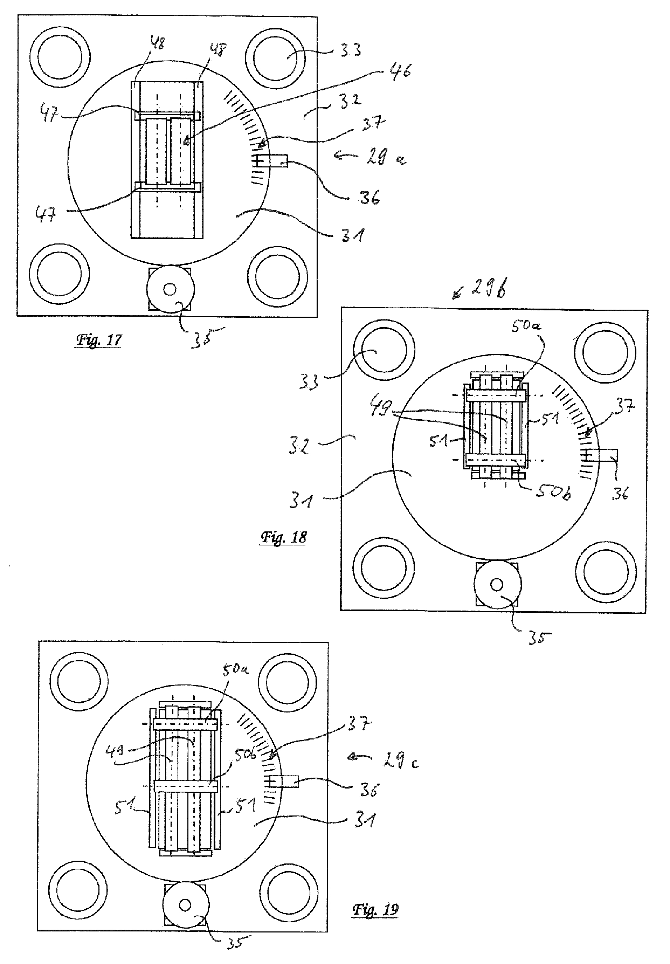

Fig. 17 bis 19 zeigen Varianten von Verdrillelementen 29a bis 29c. Sämtliche Verdrillelemente 29a bis c weisen ein Rahmenteil 32 mit Bohrungen 33 für die Haltestangen 34 (siehe z. B. Fig. 14), ein Drehelement 31 mit Skala 37, einen Sensor 36 und einen Antrieb 35 für das Drehelement 31 auf. Die Verdrillelemente 29a bis c unterscheiden sich in der Art und Weise der Durchführung des hier nicht dargestellten Bandes 1. In der Verdrilleinheit 29a gemäß Fig. 17 wird das Band 1 durch ein erstes Führungsrollenpaar 46 geführt, welches auf die beiden Breitseiten des Bandes 1 wirkt. Das Führungsrollenpaar 46 ist an zwei Begrenzungsstäben 47 gehalten. Es kann vorgesehen sein, dass über die Begrenzungsstäbe 47, zum Beispiel mittels Federn oder mittels aktiver und ggf. steuerbarer, hier nicht dargestellter Kraftelemente eine das Führungsrollenpaar schließende Kraft erzeugt werden kann. Die Begrenzungsstäbe 47 können über Schienenführungen 48 in Längsrichtung der Schienen verfahren werden. Auf diese Weise lässt sich die Achse der Verdrillung des zu verdrillenden Bandes 1 verändern.

Fig. 18 zeigt ein Verdrillelement 29b, bei dem ebenfalls ein Führungsrollenpaar 49 vorgesehen ist, das mit einer Kraft zum Schließen des Rollenpaares 49 ausgestattet werden kann. Zusätzlich ist ein zweites Führungsrollenpaar 50 mit den Einzelrollen 50a und 50b vorgesehen, die auf die Kanten des durchzuführenden Bandes 1 (hier nicht dargestellt) wirken. Die Rollen 50a und 50b des zweiten Führungsrollenpaares sind ebenfalls entlang von Führungsschienen 51 verfahrbar, wodurch zum einen die Position des Bandes im Drehelement 31 und damit die Achse der exzentrischen Verdrillung verändert werden kann, zum anderen aber auch eine Anpassung an unterschiedliche Bandbreiten möglich ist.

Das Verdrillelement 29c gemäß Fig. 19 unterscheidet sich vom Verdrillelement 29b gemäß Fig. 18 lediglich dadurch, dass die Führungsschienen 51 für das zweite Führungsrollenpaar 50 länger ausgestaltet sind. Mit diesem Verdrillelement 29c kann die Verdrillachse über die gesamte Breite des zu verdrillenden Bandes 1 verschoben werden.

**Bezugszeichenliste**

| | |
|---|---|
| 1 | Band |
| 2 | Andrückrolle |
| 3 | Bauteil |
| 4 | Schicht |
| 5 | Richtungspfeil |
| 6 | Drehrichtungspfeil |
| 7 | zylinderförmiges Bauteil |
| 8 | Drehrichtungspfeil |
| 9 | Drehrichtungspfeil |
| 10 | Richtungspfeil |
| 11 | gekrümmtes Segment |
| 12 | konusförmiger Bereich |
| 13 | geradlinig abgelegter Bandabschnitt |
| 14 | nicht abgelegter unverdrillter Bandabschnitt |
| 15 | gekrümmt abgelegter Bandabschnitt |
| 16 | Faser |
| 17 | Markierung |
| 18 | Verdrillabschnitt |
| 19 | Linie |
| 20 | Drillungspfeil |
| 21 | äußere Bandkante |
| 22 | innere Bandkante |
| 23 | Vorratsrolle |
| 24 | erste Ablegevorrichtung |
| 25 | Gehäuse |
| 26 | Stauchungswellen |
| 27 | imaginäre Faser |
| 28 | Zuführelement |
| 29 | Verdrillelement |
| 30 | Durchgangsschlitz |
| 31 | Drehelement |
| 32 | Rahmenteil |
| 33 | Bohrung |
| 34 | Haltestange |
| 35 | Antrieb |
| 36 | Sensor |
| 37 | Skala |
| 38 | Erwärmungseinheit |

| | |
|---|---|
| 39 | Wärmstrecke |
| 40 | zweite Ablegevorrichtung |
| 41 | Heizelement |
| 42 | Warmhaltestrahler |
| 43 | erste Bandverarbeitungsvorrichtung |
| 44 | Rollenpaar |
| 45 | zweite Bandverarbeitungsvorrichtung |
| 46 | erstes Führungsrollenpaar |
| 47 | Begrenzungsstab |
| 48 | Schienenführung |
| 49 | Führungsrollenpaar |
| 50 | zweites Führungsrollenpaar |
| 51 | Führungsschiene |
| 52 | Abschlusselement |

## Patentansprüche

1. Verfahren zur Verarbeitung eines Bandes, bei dem das Band (1) durch einen Verdrillabschnitt (18) und durch ein den Verdrillabschnitt (18) an einem Ende begrenzendes und das Band (1) breitseitig pressendes Verarbeitungselement (2, 44) hindurch geführt wird, **dadurch gekennzeichnet dass** das Band (1) im Verdrillabschnitt (18) derart exzentrisch verdrillt wird, dass das Band am Verarbeitungselement (2, 44) eine laterale Krümmung erhält.

2. Verfahren nach Anspruch 1, **dadurch gekennzeichnet, dass** Richtung und Maß der Verdrillung so gewählt wird, dass eine sich aufgrund der lateralen Krümmung(en) zwischen seitlichen Bandaußenrändern des verarbeiteten Bandes (1) ergebende Längendifferenz im Verdrillabschnitt (18) kompensiert wird

3. Verfahren nach Anspruch 1 oder 2, **dadurch gekennzeichnet, dass** das Band (1) im Verdrillabschnitt (18) gespannt geführt wird

4. Verfahren nach einem der vorhergehenden Ansprüche, **dadurch gekennzeichnet, dass** das Band (1) in Verarbeitungsrichtung vor dem Verarbeitungselement (2, 44) erwärmt wird.

5. Verfahren nach einem der vorhergehenden Ansprüche, **dadurch gekennzeichnet, dass** das Band (1) mittels des Verarbeitungselements (2, 44) auf eine Ablagefläche eines Bauteils (3) angedrückt wird.

6. Verfahren nach Anspruch 5, **dadurch gekennzeichnet, dass** als Verarbeitungselement eine Andrückrolle (2) verwendet wird.

7. Verfahren nach einem der vorherigen Ansprüche, **dadurch gekennzeichnet, dass** die Verdrillung computergesteuert wird, wobei als Parameter für die Berechnung der Verdrillung zumindest der laterale Krümmungsradius des Bandes (1), die Breite des abzulegenden Bandes (1), die Länge des Verdrillabschnitts (18) und die Vorschubgeschwindigkeit des Bandes (1) am Verarbeitungselement (2, 44) verwendet werden.

8. Vorrichtung zum Verarbeiten eines Bandes, umfassend ein das Band (1) breitseitig pressendes Verarbeitungselement (2, 44) und ein Zuführelement (28), **dadurch gekennzeichnet dass** Mittel (28, 29) zur exzentrischen Verdrillung des abzulegenden Bandes (1) in einem sich vom Zuführelement (28) bis zum Verarbeitungselement (2, 44) erstreckenden Verdrillabschnitt (18) vorhanden sind, so dass das Band am Verarbeitungselement (2, 44) eine laterale Krümmung erhält.

9. Vorrichtung nach Anspruch 8, **dadurch gekennzeichnet, dass** die Mittel (28, 29) zur Verdrillung des abzulegenden Bandes (1) mindestens ein eine Durchführung (30) für das Band (1) aufweisendes Drehelement (31) mit einer zur Vortriebsrichtung des zu verarbeitenden Bandes (1) im Wesentlichen parallelen Drehachse umfassen.

10. Vorrichtung nach Anspruch 9, **dadurch gekennzeichnet, dass** die Durchführung (30) für das Band (1) durch auf die Breitseiten des Bandes (1) wirkende Rollen (46, 49) begrenzt ist.

11. Vorrichtung nach Anspruch 9 oder 10, **dadurch gekennzeichnet, dass** die Durchführung (30) innerhalb mindestens eines der Mittel (28, 29) zur Verdrillung in ihrer Position veränderbar ist.

**12.** Vorrichtung nach einem der Ansprüche 8 bis 11, **dadurch gekennzeichnet, dass** das Verarbeitungselement ein einseitig auf das Band (1) wirkendes Andrückelement (2), insbesondere eine Andrückrolle, ist.

**13.** Vorrichtung nach einem der Ansprüche 8 bis 11, **dadurch gekennzeichnet, dass** das Verarbeitungselement beidseitig auf das Band (1) wirkend, insbesondere ein Rollenpaar (44, 49), ist.

**14.** Vorrichtung nach einem der Ansprüche 8 bis 13, **gekennzeichnet durch** Mittel (38, 41, 42) zur Erwärmung des Bandes (1) im Verdrillabschnitt (18) und/oder in einem in Verarbeitungsrichtung des Bandes (1) dem Verdrillabschnitt (18) vorgelagerten Erwärmungsabschnitt (39).

**15.** Vorrichtung nach einem der Ansprüche 8 bis 14, **dadurch gekennzeichnet, dass** zumindest ein Teil der Mittel (38, 41, 42) zur Erwärmung des Bandes (1) im Verdrillabschnitt (18) der Verdrillbewegung folgend vorgesehen sind.

**16.** Vorrichtung nach einem der Ansprüche 8 bis 15, **gekennzeichnet durch** Mittel zur Temperierung des Verarbeitungselements (2, 44) und/oder mindestens eines der Mittel (28, 29) zum Verdrillen.

**Claims**

**1.** Method which is intended for processing a tape and in which the tape (1) is guided through a twisting portion (18) and through a processing element (2, 44), which delimits the twisting portion (18) at one end and presses the tape (1) on a broad side, **characterized in that**
the tape (1) is twisted eccentrically in the twisting portion (18) such that the tape is subjected to lateral curvature at the processing element (2, 44).

**2.** Method according to Claim 1, **characterized in that** the direction and extent of the twisting are selected such that a difference in length resulting from the lateral curvature(s) between lateral outer peripheries of the processed tape (1) is compensated for in the twisting portion (18).

**3.** Method according to Claim 1 or 2, **characterized in that** the tape (1) is guided in a tensioned state in the twisting portion (18).

**4.** Method according to one of the preceding claims, **characterized in that** the tape (1) is heated upstream of the processing element (2, 44), as seen in the processing direction.

**5.** Method according to one of the preceding claims, **characterized in that** the tape (1) is pressed onto a depositing surface of a component (3) by means of the processing element (2, 44).

**6.** Method according to Claim 5, **characterized in that** the processing element used is a pressure-exerting roller (2).

**7.** Method according to one of the preceding claims, **characterized in that** the twisting is computer-controlled, wherein parameters used for calculating the twisting include at least the lateral radius of curvature of the tape (1), the width of the tape (1) which is to be deposited, the length of the twisting portion (18) and the advancement speed of the tape (1) at the processing element (2, 44).

**8.** Apparatus for processing a tape, comprising a processing element (2, 44), which presses the tape (1) on a broad side, and a feeding element (28), **characterized in that**
means (28, 29) by way of which the tape (1) which is to be deposited is twisted eccentrically in a twisting portion (18) extending from the feeding element (28) to the processing element (2, 44) are present, and therefore the tape is subjected to lateral curvature at the processing element (2, 44).

**9.** Apparatus according to Claim 8, **characterized in that** the means (28, 29) for twisting the tape (1) which is to be deposited comprise at least one rotary element (31) which has a lead-through (30) for the tape (1) and an axis of rotation which is essentially parallel to the advancement direction of the tape (1) which is to be processed.

**10.** Apparatus according to Claim 9, **characterized in that** the lead-through (30) for the tape (1) is delimited by rollers (46, 49) which act on the broad sides of the tape (1).

11. Apparatus according to Claim 9 or 10, **characterized in that** the lead-through (30) within at least one of the twisting means (28, 29) can be changed in position.

12. Apparatus according to one of Claims 8 to 11, **characterized in that** the processing element is a pressure-exerting element (2), in particular a pressure-exerting roller, which acts on one side of the tape (1).

13. Apparatus according to one of Claims 8 to 11, **characterized in that** the processing element acts on both sides of the tape (1), and is in particular a pair of rollers (44, 49).

14. Apparatus according to one of Claims 8 to 13, **characterized by** means (38, 41, 42) for heating the tape (1) in the twisting portion (18) and/or in a heating portion (39) arranged upstream of the twisting portion (18), as seen in the processing direction of the tape (1).

15. Apparatus according to one of Claims 8 to 14, **characterized in that** at least some of the means (38, 41, 42) for heating the tape (1) are provided in the twisting portion (18) such that they follow the twisting movement.

16. Apparatus according to one of Claims 8 to 15, **characterized by** means for controlling the temperature of the processing element (2, 44) and/or of at least one of the twisting means (28, 29).


## Revendications

1. Procédé destiné au traitement d'une bande, dans lequel on guide la bande (1) à travers une section de torsion (18) et à travers un élément de traitement (2, 44) limitant la section de torsion (18) à une extrémité et pressant la bande (1) sur le côté large, **caractérisé en ce que** l'on tord la bande (1) de façon excentrique dans la section de torsion (18), de telle manière que la bande acquière à l'élément de traitement (2, 44) une courbure latérale.

2. Procédé selon la revendication 1, **caractérisé en ce que** l'on choisit la direction et l'ampleur de la torsion, de telle manière qu'une différence de longueur apparaissant entre des bords extérieurs de bande latéraux de la bande traitée (1) à cause de la/des courbure (s) latérale(s) soit compensée dans la section de torsion (18).

3. Procédé selon la revendication 1 ou 2, **caractérisé en ce que** l'on guide la bande (1) sous tension dans la section de torsion (18).

4. Procédé selon l'une quelconque des revendications précédentes, **caractérisé en ce que** l'on chauffe la bande (1) avant l'élément de traitement (2, 44) dans la direction de traitement.

5. Procédé selon l'une quelconque des revendications précédentes, **caractérisé en ce que** l'on applique la bande (1) sur une face d'application d'un composant (3) au moyen de l'élément de traitement (2, 44).

6. Procédé selon la revendication 5, **caractérisé en ce que** l'on utilise comme élément de traitement un rouleau de pression (2).

7. Procédé selon l'une quelconque des revendications précédentes, **caractérisé en ce que** l'on commande la torsion par ordinateur, dans lequel on utilise comme paramètres pour le calcul de la torsion au moins le rayon de courbure latéral de la bande (1), la largeur de la bande à appliquer (1), la longueur de la section de torsion (18) et la vitesse de progression de la bande (1) à l'élément de traitement (2, 44).

8. Dispositif destiné au traitement d'une bande, comprenant un élément de traitement (2, 44) pressant la bande (1) sur son côté large et un élément d'amenée (28), **caractérisé en ce qu'**il se trouve des moyens (28, 29) pour la torsion excentrique de la bande à appliquer (1) dans une section de torsion (18) s'étendant de l'élément d'amenée (28) à l'élément de traitement (2, 44), de telle manière que la bande acquière à l'élément de traitement (2, 44) une courbure latérale.

9. Dispositif selon la revendication 8, **caractérisé en ce que** les moyens (28, 29) destinés à la torsion de la bande à appliquer (1) comprennent au moins un élément tournant (31) présentant un passage (30) pour la bande (1) et ayant un axe de rotation essentiellement parallèle à la direction de progression de la bande à traiter (1).

10. Dispositif selon la revendication 9, **caractérisé en ce que** le passage (30) pour la bande (1) est limité par des rouleaux (46, 49) agissant sur les côtés larges de la bande (1).

11. Dispositif selon la revendication 9 ou 10, **caractérisé en ce que** le passage (30) peut changer de position à l'intérieur d'au moins un des moyens (28, 29) destinés à la torsion.

12. Dispositif selon l'une quelconque des revendications 8 à 11, **caractérisé en ce que** l'élément de traitement est un élément de pression (2) agissant sur un côté de la bande (1), en particulier un rouleau de pression.

13. Dispositif selon l'une quelconque des revendications 8 à 11, **caractérisé en ce que** l'élément de traitement est en particulier une paire de rouleaux (44, 49), agissant sur les deux côtés de la bande (1).

14. Dispositif selon l'une quelconque des revendications 8 à 13, **caractérisé par** des moyens (38, 41, 42) pour chauffer la bande (1) dans la section de torsion (18) et/ou dans une section de chauffage (39) installée en amont de la section de torsion (18) dans la direction de traitement de la bande (1).

15. Dispositif selon l'une quelconque des revendications 8 à 14, **caractérisé en ce qu'**au moins une partie des moyens (38, 41, 42) pour le chauffage de la bande (1) sont prévus dans la section de torsion (18) en suivant le mouvement de torsion.

16. Dispositif selon l'une quelconque des revendications 8 à 15, **caractérisé par** des moyens pour équilibrer la température de l'élément de traitement (2, 44) et/ou d'au moins un des moyens (28, 29) destinés à la torsion.

Fig. 1    Stand der Technik

Fig. 2    Stand der Technik

Fig. 3    Stand der Technik

Fig. 4

Stand der Technik

Fig. 5

Fig. 6    Stand der Technik

Fig. 7

Fig. 8 b)    Stand der Technik    Fig. 8 a)

Fig. 9 b)

Fig. 9 a)

Fig. 10 a)

Fig. 10 b)

Fig. 11

_**Fig. 12**_

_**Fig. 13**_

*Fig. 14*

*Fig. 15*

*Fig. 16*

Fig. 17

Fig. 18

Fig. 19

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5078821 A
- DE 102009014488 A1
- DE 102008051121 A1